# EUROPEAN PATENT APPLICATION

(11) **EP 0 588 600 A1**
(43) Date of publication of application: **23.03.1994**
(21) Application number: 93307243.1
(22) Date of filing: 14.09.1993
(51) Int. Cl.: A23L 1/164

(54) **Snack food**

(30) Priority: 16.09.1992 GB 9219587
(71) Applicant: KERNELS FOODS Plc, London NW10 6EX (GB)
(72) Inventor: Finger, Paul Jonathan, London N10 (GB); Eckhardt, David, London WC1 (GB)
(74) Representative: Rees, David Christopher

(57) **Abstract**

A method of manufacturing a snack food. A dough is formed from durum wheat flour, a similar hard wheat flour or fine semolina and water. The dough is formed into a series of the required shapes and fried and subsequently cooled rapidly. The dough comprises a relatively high water content.

## Description

The present invention relates to snack foods, in particular, savoury snack foods, though the invention is also applicable to non-savoury foods.

Known savoury snack foods are generally made from potatoes or from potato flour. These include crisps, which may be made by frying potato slices directly, and other crisp-like products in various shapes which are made from potato flour or pulp and then fried. Since potatoes naturally have a high water content and a high starch content, when they are simply fried, a light crisp product is obtained. Other products in this general field may be made from wheat flour and fried in to a variety of shapes.

However, one of the main disadvantages of these products is the fact that they tend to be high in fat content and low in protein. They are therefore perceived as being unhealthy.

Another product is made by extruding and frying a corn mix. However, corn mix includes a natural starch which expands on heating. Little water is necessary and the corn snack product tends to be extremely light but again has a low protein content.

It is an object of the present invention to provide a method of manufacturing a savoury snack food which results in a product which has lower fat content and a higher protein content, compared with known potato crisps.

According to the invention, a method for manufacturing a snack food comprises: forming a dough from durum wheat flour or a similar hard wheat flour or from fine semolina; forming the dough into a series of the required shapes; frying the raw formed shapes; and cooking the fried shapes.

The dough may comprise, by weight, 65% solid material, and 35% to 15% water and preferably comprises 70% to 80% solid material and 30 to 20% water, and more preferably comprises 75% to 77% solid material and 25% to 28% water. It will be appreciated that this represents a relatively high water content for the raw material. Preferably, the solid material is semolina. The dough is effectively a form of pasta.

The dough is preferably formed into the required shapes by passing it through a die, for example, a screw feed die. The dough is preferably extruded at a pressure in the range of perhaps 500 to 2500 lb/in² (3.4 - 17.2MPa), preferably 800 to 1500 lb/in² (5.5 to 10.3MPa), more preferably 900 to 1200 lb/in² (6.2 to 8.3MPa), though the actual pressure will be dependent upon such factors as temperature, die size, dough composition etc and is probably best determined by trial. The dough is preferably cut into suitable lengths which may or may not vary.

The raw shapes are then fried, preferably by submerging in a deep fryer. Preferably, the raw shapes are transferred to the fryer immediately they leave the extruder so that their relatively high water content remains unchanged. Preferably, therefore the time from extrusion to arrival at the fryer is less than 5 seconds, and more preferably less than 2 seconds.

The frying temperature may be from 150°C to 220°C, preferably 180°C to 210°C, more preferably 190°C to 200°C. The frying time may vary from 30 to 120 seconds, depending upon the form of the shapes and the frying temperature, but is preferably between 50 and 80 seconds. The preferred frying medium is a high quality vegetable oil such as groundnut oil.

The cooked shapes are preferably cooled rapidly to ambient temperature, for example by a cooling air quench. The cooling operation preferably takes no more than 120 seconds and preferably less than 90 seconds. It has been found that long cooling times results in a product with a tough bite.

Immediately after cooling, the cooked shapes are preferably flavoured. This may be carried out by applying flavouring powder in a drum which may vibrate or rotate. The flavour may be added at a rate of 3% to 10%, depending upon the strength of flavour. The preferred flavouring rate is 5% to 8%.

The end product is a crispy pasta snack which has approximately twice the protein content and half the fat content of standard potato crisps.

The invention also extends to the products itself.

The invention may be carried into practice in various ways and one embodiment will now be described by way of example.

A method of manufacturing a pasta snack food comprises initially making the a pasta dough in a pasta kneading machine. The dough comprises 76% weight fine semolina and 24% by weight water. The kneaded mixture is passed through a screw feed die and extruded at 1000 lb/in² (6.9MPa) to a twisted spiral form. The extruded material is cut into varying lengths of about 50mm.

The raw pasta spirals are then fried by submerging them in groundnut oil at 190-200°C for 60-70 seconds. Once cooked, they are removed and rapidly cooled in air to ambient temperature within 1 minute. 1g of the fried pasta is found to occupy 1.4cm³, giving a density of 0.174g/cm³. The cooled, cooked pasta spirals are then rotated in a flavouring drum, where flavouring powder is added at a rate of about 6%.

The end product is a crispy pasta twirl snack which is high in protein and low in fat.

## Claims

1. A method for manufacturing a snack food which comprises forming a dough from flour and water, forming the dough into a series of shapes, frying the raw formed shapes and subsequently cooling the fried shapes, characterised in that the dough is formed from durum wheat flour or a similar hard wheat flour or from fine semolina.

2. A method as claimed in Claim 1, characterised in that the dough comprises, by weight, 65 to 85% solid material and 35 to 15% water, preferably 70 to 80% solid material and 30 to 20% water.

3. A method as claimed in Claim 1 or Claim 2, characterised in that the dough is formed into the required shapes by passing it through a dye, for example a screw feed dye.

4. A method as claimed in Claim 3, characterised in that the dough is extruded at a pressure in the range of 3.4 to 17.2 MPa, preferably 5.5 to 10.3 MPa.

5. A method as claimed in Claim 4, characterised in that the raw shapes are transferred to a deep fat fryer for a frying within 5 seconds of leaving the extruder.

6. A method as claimed in any preceding Claim, characterised in that the frying temperature is from 150°C to 220°C, preferably from 180°C to 210°C.

7. A method as claimed in any preceding Claim, characterised in that the frying time is between 30 and 120 seconds, preferably between 50 and 80 seconds.

8. A method as claimed in any preceding Claim, characterised in that the cooling is carried out by means of a cooling air quench which takes no more than 120 seconds.

9. A method as claimed in any preceding Claim, characterised in, that immediately after cooling, the cooked shapes are flavoured.

10. A method as claimed in Claim 9, characterised in that the flavour is added at a rate of 3 to 10%, preferably 5 to 8%.
